Europäisches Patentamt

European Patent Office

Office européen des brevets

(19)

(11) EP 1 415 780 A2

(12) EUROPEAN PATENT APPLICATION

(43) Date of publication:
06.05.2004 Bulletin 2004/19

(51) Int Cl.⁷: **B28D 1/04**, B23D 45/18

(21) Application number: 03078197.5

(22) Date of filing: 09.10.2003

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: 04.11.2002 IT RE20020085

(71) Applicant: **SACMI COOPERATIVA MECCANICI IMOLA Soc. Coop. a r.l.**
**40026 Imola (Bologna) (IT)**

(72) Inventor: **Ricci, Claudio**
**c/o SACMI Coop. Meccanici Imola**
**40026 Imola (Bologna) (IT)**

(74) Representative: **Corradini, Corrado et al**
**Studio Ing. C. CORRADINI & C. S.r.l.**
**4, Via Dante Alighieri**
**42100 Reggio Emilia (IT)**

(54) **Apparatus for cutting a continuous flat ceramic web into slabs**

(57)     Apparatus for sectioning a compacted continuous web (4) of ceramic powders into blanks, comprising a conveyor for advancing said compacted web with continuous movement through at least one cutting station provided for sectioning it in the direction transverse to its advancement direction, said cutting station presenting at least one cutting tool (10) arranged to translate on a guide (8) positioned in a direction oblique to the advancement direction of said flat feed product.

FIG.1

EP 1 415 780 A2

**Description**

The present invention relates to a plant for cutting compacted slabs of ceramic material.

Ceramic tile forming methods are known comprising preparing a powder mass, precompacting it to obtain a continuous flat feed product of cohesive powders, possibly decorating said feed product with at least a second layer of powders to form a surface decoration, dividing said continuous precompacted feed product into blanks of suitable dimensions, and finally pressing said blanks to obtain the formed tile. Other methods comprise compacting a powder mass to obtain a flat feed product and then dividing it into smaller dimension blanks to obtain the formed tile.

In the known art, to divide said precompacted or compacted flat feed product into blanks, the feed product is advanced below a cutting station, in which fixed rotating blades section the feed product in its advancement direction, and at least one movable rotating blade translates in a direction perpendicular to the feed product while advancing at the same speed.

The movable rotating blade is supported by a first guide which is perpendicular to the feed product advancement axis and is itself supported by and translates on a second guide parallel to said axis. By virtue of the combination of its two movements along the first and second guide, the blade sections the feed product in the direction perpendicular to its advancement direction.

Although the aforedescribed plant perfectly carries out the task for which it is provided, it has proved costly and complicated to operate.

The object of the present invention is to overcome the problems of the known art within the framework of a simple and rational solution, the cost of which is less than systems of known type.

The invention attains said object by virtue of the characteristics defined in the claims.

In particular, the invention provides a plant for sectioning a precompacted or compacted continuous web of ceramic powders into blanks, comprising a conveyor for advancing said web with continuous movement through at least one cutting station provided with at least one cutting tool arranged to translate on a single guide in a direction oblique to the advancement direction of said web to section the feed product in a direction perpendicular to its advancement direction.

According to the invention said at least one cutting tool is adjustable in its height above the plane of the feed product web and translates on at least one guide oblique to the web advancement direction, said translation being achieved by a suitable linear drive means, such as a linear electric motor. Preferably the angle which said guide forms to the feed product advancement axis is between 10° and 45°.

According to a main embodiment of the invention, said at least one cutting tool comprises at least one rotating blade, the plane in which it lies being perpendicular to the longitudinal axis of the feed product.

In this case the component of the cutting tool translation speed in the web advancement direction must be equal to advancement speed of the web itself, so that during its translation the tool cuts the web perpendicular to its advancement direction.

In other embodiments of the invention said cutting means comprise a cylindrical milling cutter of vertical axis, or a laser beam, or a high pressure fluid jet.

The conveyor used by the invention can be either of belt type or a conveying band of mesh type.

If a belt conveyor is used, the conveying or working surface on which the web rests must preferably comprise a plurality of cavities the purpose of which is both to increase the friction force between the web and the belt in order to prevent relative slippage which would impede the formation of a sharp cut in the web, and to receive a part of the cutting-generated dust in the recesses of said cavities.

Receiving the dust in the cavities is very advantageous in terms of quality or sharpness of the cut made. This is because any dust granules which were to remain within the operating zone of the cutting tool could ruin the profile of the cut edge.

The dust collected by the recesses of said cavities is then discharged by a motorized cylindrical brush into a suction hopper positioned in proximity to the end of the conveyor.

If instead a mesh-type band conveyor is used, the cutting-generated dust is collected by an underlying hopper, possibly maintained under vacuum. The plant also comprises a second cutting station provided with cutting tools arranged to section the compacted web in its advancement direction. These latter cutting tools are positioned parallel to each other at an adjustable distance apart and can comprise either rotating blades or cylindrical milling cutters of vertical axis or laser beams or jet of pressurized fluids.

The plant of the invention will be more apparent from the ensuing description of a preferred embodiment thereof given by way of non-limiting example and illustrated in the accompanying drawings.

Figure 1 is an isometric view of the plant according to the invention.

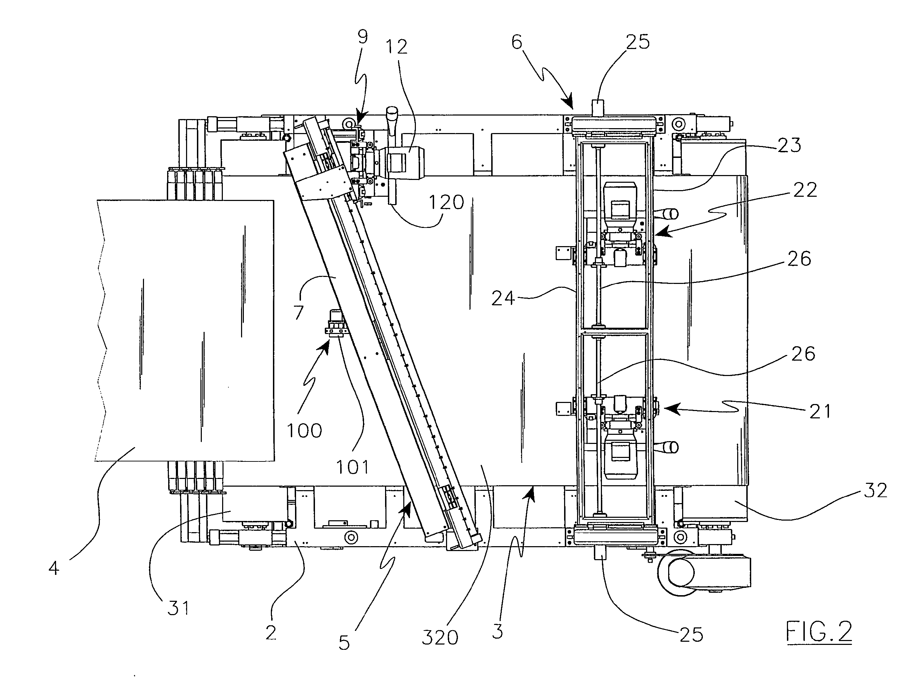

Figure 2 is a view of Figure 1 from above.

Figure 3 is a view in the direction III of Figure 1.

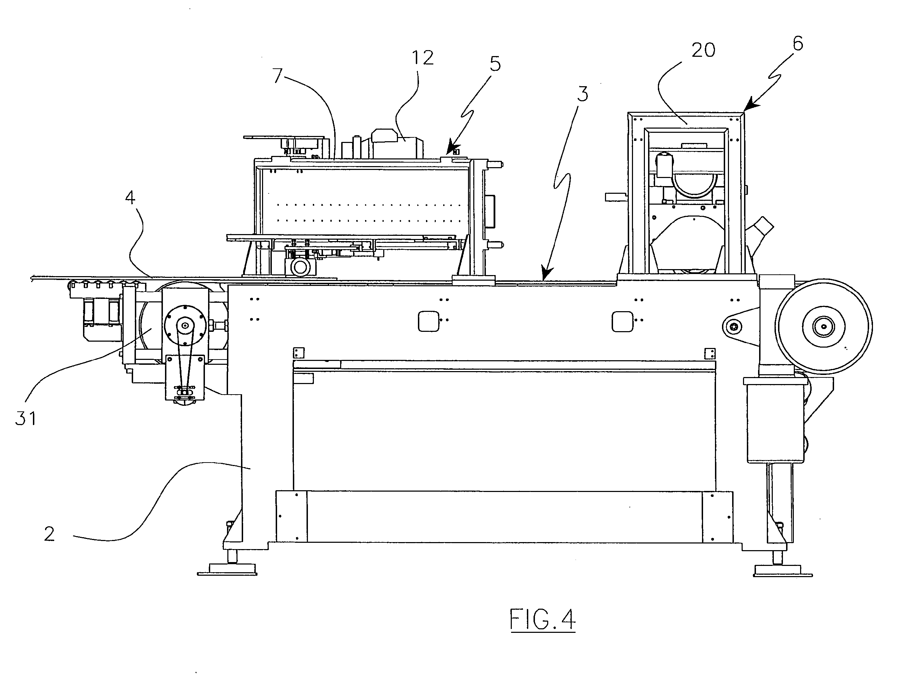

Figure 4 is a side view of Figure 1.

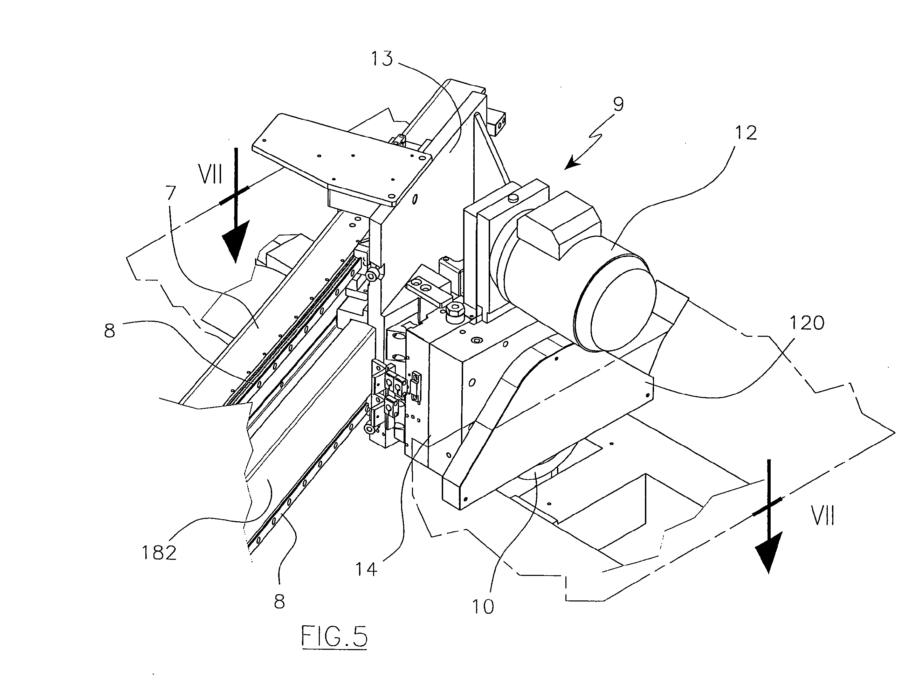

Figure 5 shows a detail of said first cutting station.

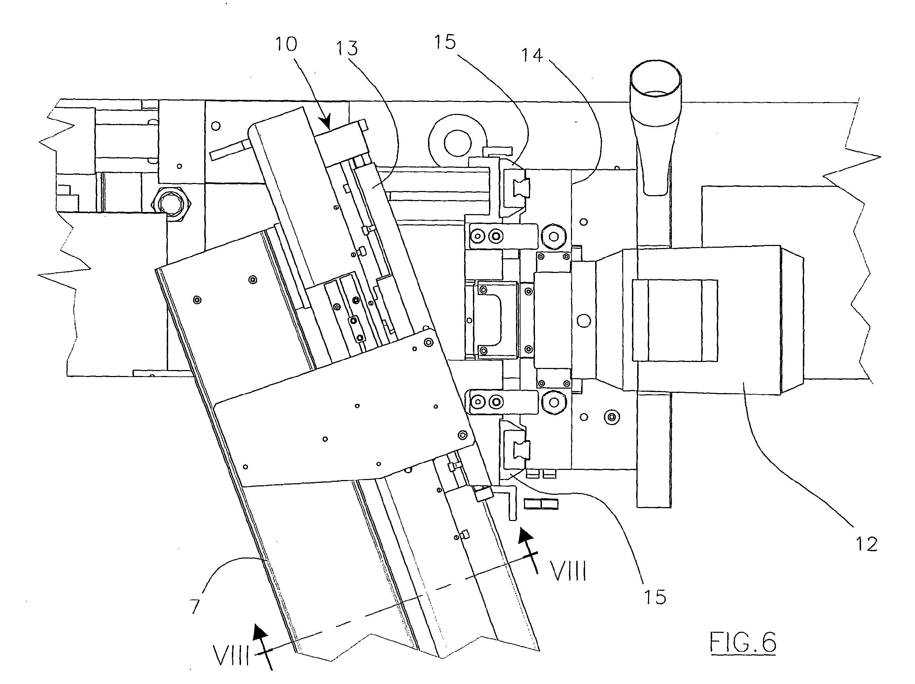

Figure 6 is a view of Figure 5 from above.

Figure 7 is a section on the line VII-VII of Figure 5.

Figure 8 is a section on the line VIII-VIII of Figure 6.

Said figures show the plant 1, comprising a support frame 2 for a motorized conveyor 3 for advancing a continuous web 4, or feed product, of precompacted ceramic powders through two cutting stations 5 and 6 supported by the said frame 2.

In the illustrated example the conveyor 3 comprises a belt 30 of synthetic material taut between two rollers 31 and 32, the roller 32 being motorized. The active surface 320 of the belt 32 advantageously presents a series of cavities, not shown, which facilitate retention of the precompacted continuous web 4 on said surface by friction. Said cavities also collect the dust granules which are formed during the sectioning of the feed product, as described hereinafter.

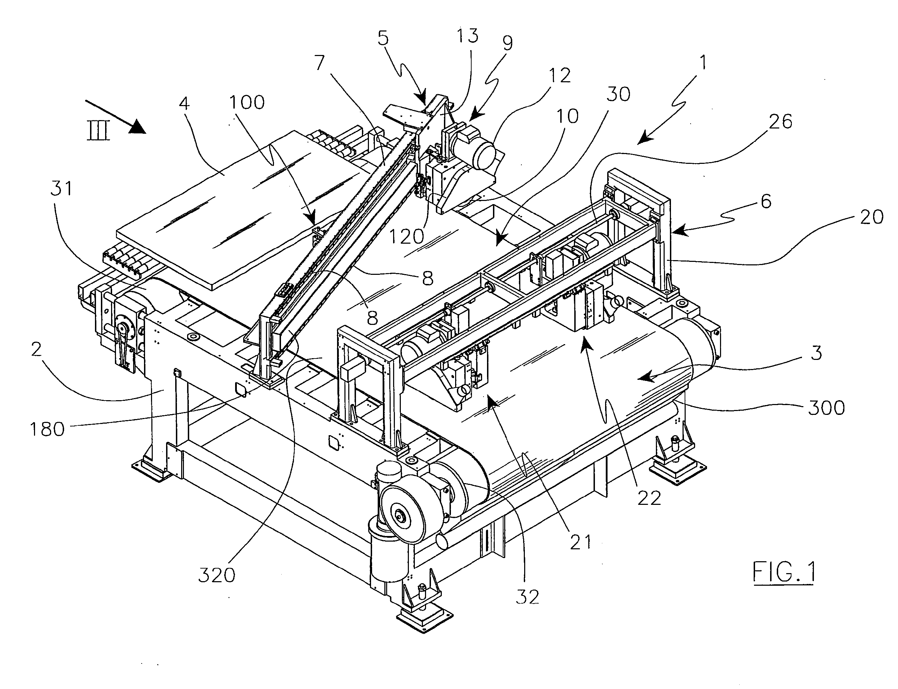

With reference to Figure 1, the cutting station 5 comprises, fixed to the frame 2, a portal 7 with its axis oblique to the advancement direction of the web 4. The inclination of this axis varies preferably between 10° and 45°. The portal 7 supports two parallel guide bars 8 on which a working head 9 slides provided with a cutting tool 10 which, in the illustrated embodiment, is a circular blade rotated by an electric motor rigid with it.

In the illustrated example the electric motor 12 is of the three-phase induction type, but can also be of a different type, for example high frequency synchronous or brushless.

With said circular blade there is associated a hood 120 connected to suction means, not shown, for removing part of the dust which forms during cutting.

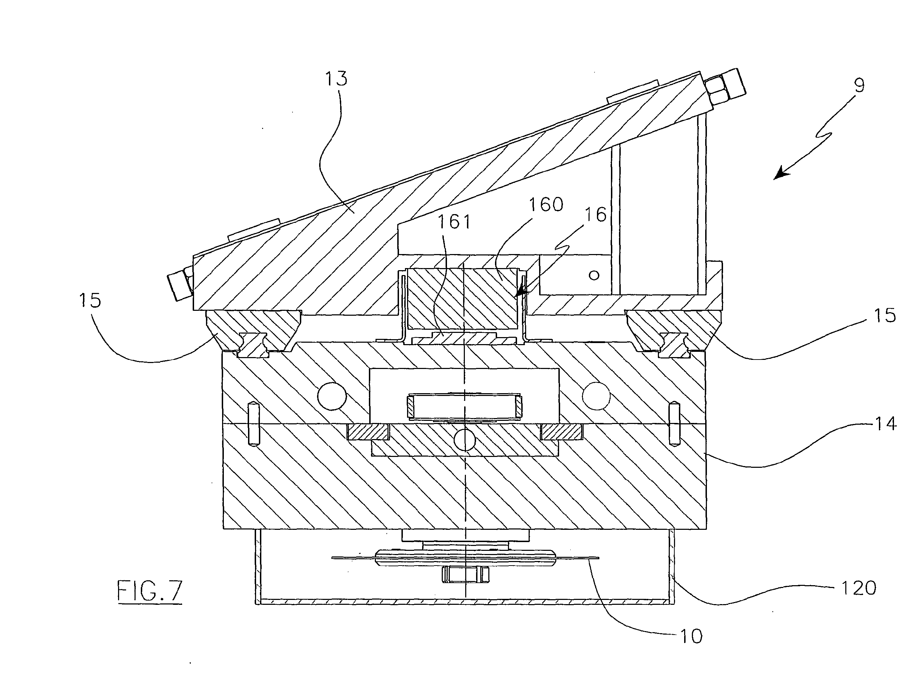

With reference to Figure 7, the working head 9 comprises, for sliding on the guide bars 8, a slide 13 with an associated body 14 which supports the cutting tool 10. The body 14 can translate vertically relative to said slide 13, it being secured thereto by two parallel guides 15. Translation of the body 14 relative to the slide 13 is achieved by a linear drive motor 16, the stator 160 of which is rigid with the slide 13, its translator 161 being rigid with the body 14.

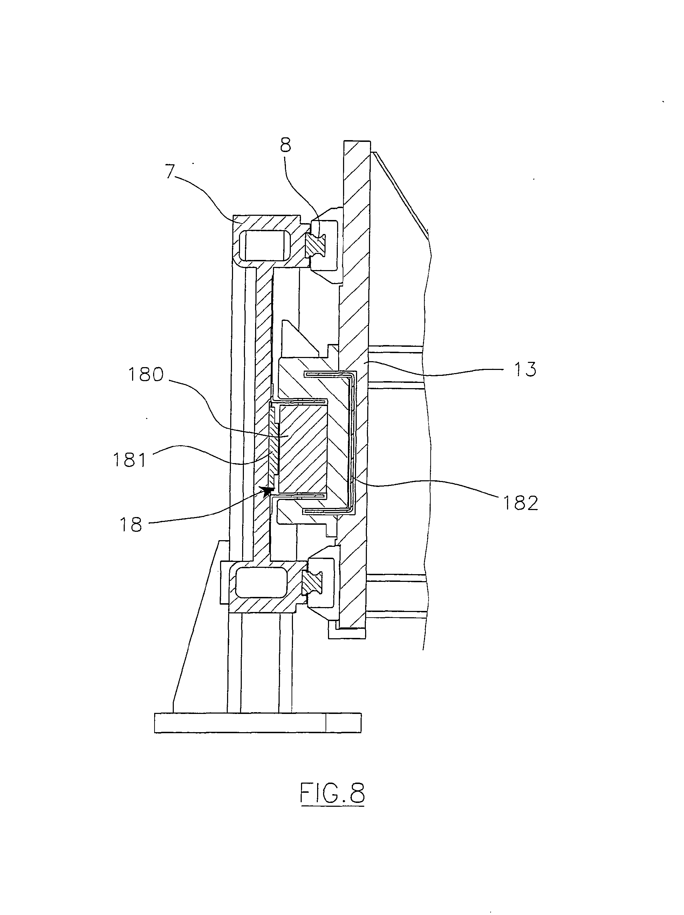

With reference to Figure 8, translation of the slide 13 along the bars 8 is achieved by an electric linear drive motor 18 the stator 180 of which is rigid with the slide 13, its translator 181 being rigid with the portal 7.

The linear drive 18 is positioned within a protection casing 182.

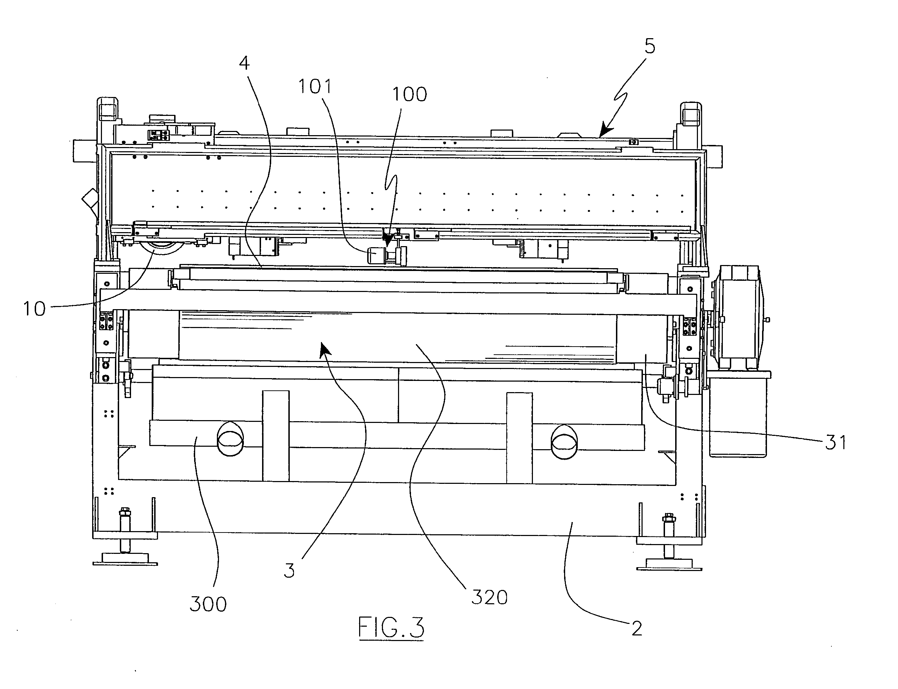

A system 100 (Figure 3) for measuring the advancement speed of the web 4 is also fixed to the portal 7. This system comprises an encoder 101, the measurements of which are fed to a processor, not shown, which controls the operation of the invention.

Downstream of the cutting station 5 there is positioned the second cutting station 6, provided to cut the precompacted web along its advancement direction.

The frame 2 also supports a portal frame 20 for the second cutting station 6.

With reference to Figure 1, said second cutting station comprises a frame 20 on which two parallel identical cutting units 21 and 22 are supported, each of which carries a cutting tool 230, which in the illustrated example comprises a circular blade, the plane in which it lies being parallel to the axis of the web.

The two cutting units 21 and 22 are substantially identical to the working head 9, with the only difference that each of them can slide on two horizontal parallel guides 23 and 24 positioned perpendicular to the axis of the conveyor 3. Translation of each cutting unit 21 and 22 is achieved by a respective positioner 25, the shaft of which is associated with a respective ball recirculation screw 26, with which the unit is mechanically associated.

With reference to Figures 1 and 3 it can be seen that in proximity to the end region of the conveyor there is positioned a hopper 300 for collecting the dust resulting from the sectioning and which has not been drawn in during the sectioning itself. In the interior of said hopper 300 there is a brush, not shown, the purpose of which is to remove said dust from the conveyor surface, in particular from the cavities therein.

It should also be noted that the plant is enclosed in a fixed safety protection casing to which access for the operator is possible only via suitable interlocked gates, which can be opened only when the plant is in the rest condition.

The operation of the plant of the invention, controlled by a control system operated by the processor, will now be described.

The compacted web of ceramic powder originating from a continuous compactor, not shown, is made to advance by the belt conveyor 3. When the web arrives in proximity to the cutting station 5 its speed is measured by the measurement system 100.

When the web arrives in proximity to the cutting tool, the processor causes the blade to rotate and the tool to translate at a speed such that the resultant cut in the compacted ceramic powder web is perfectly perpendicular to its advancement direction.

For the cut to be perfectly perpendicular to the web advancement direction the translation speed VT of the tool relative to the portal 7 is given by the equation:

$$VT = VP/\sin\alpha$$

where VP represents the advancement speed of the compacted ceramic powder web, and $\alpha$ the angle of inclination of the guides on which the working head 9 slides, to the perpendicular to the web advancement direction.

The control system controls the translation by means of the processor in such a manner as to precisely maintain this relationship between the speed VP, measured by the measurement system 100, and VT, such that the cut takes place along a straight line, with a rectilinearity precision within a few tenths of a millimetre.

After cutting, the working head returns to its initial position in preparation for a new cycle.

For this purpose the cutting tool 10 is made to rise by the linear motor 16 such that during its return stroke the tool is raised above the web 4 advancing on the conveyor belt 3.

The compacted ceramic powder web is then divided into blanks of the required length, in that after the movable unit has returned to its starting position the cut is repeated at regular intervals based on the desired blank dimensions.

The blanks continue their advancement travel conveyed by the belt 30. During said travel they encounter the cutting units 21 and 22 provided to laterally cut them to the desired width, so completing the cutting action. It should be noted that said cutting units 21 and 22 are positionable independently both in height and transversely, to hence determine with an accuracy of the order of some tenths of a millimetre the final width of the blank cut from the web.

Finally, in the illustrated embodiment the invention is used to divide a slab of precompacted material into blanks, however it can also be advantageously used on already compacted ceramic feed products.

**Claims**

1. A plant for sectioning a compacted continuous web of ceramic powders into blanks, comprising a conveyor for advancing said compacted web with continuous movement through at least one cutting station provided for sectioning it in the direction transverse to its advancement direction, **characterised in that** said cutting station presents at least one cutting tool arranged to translate on a guide positioned in a direction oblique to the advancement direction of said flat feed product.

2. A plant as claimed in claim 1, **characterised in that** said at least one cutting tool is adjustable in its height above the plane of said compacted web.

3. A plant as claimed in claim 2, **characterised in that** the angle which said guide forms to the feed product advancement axis is between 10° and 45°, the speed VT of translation of the tool relative to the guide positioned in a direction oblique to the advancement direction of said flat feed product being given by the equation $VT = VP/\sin\alpha$ where VP represents the advancement speed of the compacted ceramic powder web, and $\alpha$ the angle of inclination of the tool guide to the perpendicular to the web advancement direction.

4. A plant as claimed in claim 2, **characterised in that** the translation of said at least one cutting tool on said guide is achieved by a suitable linear drive means.

5. A plant as claimed in claim 4, **characterised in that** said drive means is a linear electric motor.

6. A plant as claimed in claim 1, **characterised in that** said at least one cutting tool comprises a rotating blade.

7. A plant as claimed in claim 6, **characterised in that** said blade is rotated by an electric motor.

8. A plant as claimed in claim 6, **characterised in that** said blade lies in a plane perpendicular to the longitudinal axis of said web.

9. A plant as claimed in claim 1, **characterised in that** said at least one cutting tool comprises a cylindrical milling cutter of vertical axis.

10. A plant as claimed in claim 1, **characterised in that** said at least one cutting tool comprises a laser beam.

11. A plant as claimed in claim 1, **characterised in that** said at least one cutting tool comprises a jet of pressurized fluid.

12. A plant as claimed in claim 1, **characterised by** comprising a second cutting station provided with cutting tools provided for sectioning said compacted web in its advancement direction.

13. A plant as claimed in claim 12, **characterised in that** said tools for cutting the web in its advancement direction comprise two parallel rotating blades of adjustable distance apart, which lie in planes perpendicular to the plane in which the feed product lies and parallel to the advancement direction of the compacted web.

14. A plant as claimed in claim 12, **characterised in that** said tools for cutting the compacted web in its advancement direction comprise cylindrical milling cutters of vertical axis and adjustable distance apart.

15. A plant as claimed in claim 12, **characterised in that** said tools for cutting the compacted web in its advancement direction comprise two laser beams of adjustable distance apart.

16. A plant as claimed in claim 12, **characterised in that** said tools for cutting the precompacted web in its advancement direction comprise two jets of pressurized fluid of adjustable distance apart.

17. A plant as claimed in claim 1, **characterised in that** said conveyor is a belt conveyor.

18. A plant as claimed in claim 17, **characterised in that** the active surface of said belt presents cavities.

19. A plant as claimed in claim 1, **characterised in that** said conveyor comprises a mesh band.

**20.** A plant as claimed in claim 1, **characterised by** comprising a lower hopper for collecting the dust which deposits on said conveyor during cutting.

**21.** A plant as claimed in claim 20, **characterised in that** a brush for cleaning the surface of said conveyor is associated with said hopper.

FIG.1

EP 1 415 780 A2

FIG.2

FIG.3

FIG.4

EP 1 415 780 A2

FIG.5

FIG.6

EP 1 415 780 A2

FIG.7

FIG.8